# EUROPEAN PATENT SPECIFICATION

(11) **EP 3 263 204 B1**
(45) Date of publication and mention of the grant of the patent: **19.09.2018**
(21) Application number: 17178026.5
(22) Date of filing: 27.06.2017
(51) Int. Cl.: B01D 33/067, B01D 33/073

(54) **PRESSURE AND/OR VACUUM FILTER DEVICE**
DRUCK- UND/ODER VAKUUMFILTERVORRICHTUNG
LA PRESSION ET/OU DISPOSITIF DE FILTRE À VIDE

(30) Priority: 28.06.2016 DE 102016111842
(43) Date of publication of application: 03.01.2018
(73) Proprietor: Andritz KMPT GmbH, 85256 Vierkirchen (DE)
(72) Inventor: KNOBLOCH, Wolfgang, 82327 Tutzing, Unterzeismering, (DE); FELLER, Johannes, 83104 Tuntenhausen (DE); SCHULZE, Gert, 82194 Gröbenzell, (DE); HEGNAUER, Bruno, 81131 Gauting (DE)
(74) Representative: Viering, Jentschura & Partner mbB Patent- und Rechtsanwälte

(56) References cited:
- WO-A1-94/00218
- JP-A- S54 108 976
- US-A- 2 018 398
- US-A- 2 567 266
- US-A- 3 036 354
- US-A1- 2007 251 873

## Description

The present invention relates to a pressure and/or vacuum filter device comprising a filter drum.

Such pressure and/or vacuum filter devices are used, e.g., for filtering out a solid from a solid-liquid-suspension, wherein the filter drum is provided on its outer side with a filter medium, on which, during the filter process, the solid to be filtered out, sticks, wherein liquid passes therethrough.

The invention provides a pressure and/or vacuum filter device which allows an easy, quick and reliable fixation of the filter medium on the filter drum.

To this end the invention provides a pressure and/or vacuum filter device comprising a filter drum which defines a filter drum longitudinal-axis and which comprises a filter drum circumferential-wall which extends around the filter drum longitudinal-axis, a filter medium (e.g., a filter cloth in form, e.g., of a plastic and/or metal fabric) which is arranged on an outer side of the filter drum circumferential-wall, and a plurality of fixation devices, by means of which the filter medium is fixedly attached to the filter drum circumferential-wall, wherein the filter medium comprises a plurality of (e.g. elongated) filter medium pieces which are separate from each other and which each are made of a filter cloth material und which each have filter medium piece longitudinal-edges, which are arranged opposite to each other and which are at least for the most part a non-patched (that is, e.g., seamless (such as, e.g., sutureless and glueless)) part (e.g. component) of the filter cloth material, as well as filter medium piece transverse-edges, which are arranged opposite to each other and which, e.g., are also at least for the most part a non-patched (that is, e.g., seamless (such as, e.g., sutureless and glueless)) part (e.g. component) of the filter cloth material (that is, the filter medium piece longitudinal-edges and/or the filter medium piece transverse-edges thus are also at least for the most part a seamless (that is, e.g., one piece seamless) part (e.g. component) of the corresponding filter medium piece), and which (filter medium pieces) extend with their filter medium piece longitudinal-edges parallel to the filter drum longitudinal-axis as well as adjacently to each other to thereby form an at least for the most part (e.g., an at least substantially) complete (e.g., closed) filter medium surface, wherein the plurality of fixation devices comprises a plurality of elongated longitudinal-edge receiving grooves which each define a longitudinal-edge receiving groove longitudinal-axis and each have an elongated (e.g., at least for the most part or, e.g., substantially continuous) longitudinal-edge receiving groove access opening, which extends along the longitudinal-edge receiving groove longitudinal-axis, and which are formed on the filter drum circumferential-wall and extend with their longitudinal-edge receiving groove longitudinal-axis parallel to the filter drum longitudinal-axis as well as are spaced from each other in circumferential direction of the filter drum and into which two filter medium piece longitudinal-edges (of the filter medium piece longitudinal-edges), which are adjacent to each other, each (e.g., respectively) engage via the corresponding longitudinal-edge receiving groove access opening, wherein the respective longitudinal-edge receiving groove is formed, with respect to the longitudinal-edge receiving groove longitudinal-axis, on both sides with a respective elongated undercut, which (elongated undercut) extends (e.g., at least for the most part continuously) along the longitudinal-edge receiving groove longitudinal-axis and which is assigned to a respective filter medium piece longitudinal-edge, wherein the respective filter medium piece longitudinal-edge is at least for the most part continuously provided with a filter medium longitudinal-edge reinforcement which is flat ribbon shaped and which is arranged adjacently to a front face of the filter medium piece longitudinal-edge and on the filter medium piece longitudinal-edge and (which) is patched to the filter medium piece longitudinal-edge (e.g., is fixed thereto by means of suturing and/or gluing (e.g. by means of a suture seam and/or a glue seam)), wherein the respective (e.g., each) filter medium piece longitudinal-edge together with its flat ribbon shaped filter medium longitudinal-edge reinforcement is arranged within the respectively assigned undercut, and wherein the plurality of fixation devices further comprises a plurality of elongated longitudinal-edge holding bodies, which each (e.g., respectively) define a longitudinal-edge holding body longitudinal-axis and which are received in a respectively assigned longitudinal-edge receiving groove (of the longitudinal-edge receiving grooves) and which extend with their longitudinal-edge holding body longitudinal-axis parallel to the longitudinal-edge receiving groove longitudinal-axis of the corresponding longitudinal-edge receiving groove and which each have a longitudinal-edge holding body cross-sectional diameter which is larger than a width of the longitudinal-edge receiving groove access opening of the corresponding longitudinal-edge receiving groove to thereby hold the respective filter medium piece longitudinal-edge together with its flat ribbon shaped filter medium piece longitudinal-edge reinforcement within the respectively assigned undercut (e.g., in at least a form-fit manner, or form-and-force-fit manner).

The filter cloth material of the respective (e.g., each) filter medium piece is, e.g., formed itself at least for the most part (e.g., at least substantially) in a seamless (e.g., sutureless and glueless) (e.g., respectively one piece seamless) manner, which, e.g., means that the area (e.g. surface) of the filter cloth material of the respective (e.g., each) filter medium piece is by more than 50% (or at least 70%, or at least 80%) (= e.g., for the most part), or e.g., by at least 90% (= e.g., substantially)) made of a regular and uniform filter cloth material (e.g., filter fabric cloth material), in which no additional seams are present, which are different from the regular filter cloth material (fabric) structure.

Alternative solutions for fixing the edges of a filter cloth on the surface of a filter drum are disclosed in WO 94/00218, US 3,036,354 and US 2,567,266. The pressure and/or vacuum filter device may be provided with a basin (e.g., a pan), in which the solid liquid suspension is contained and into which a lower portion of the filter drum engages. The filter drum is, e.g., rotatable about its filter drum longitudinal-axis so that, in a continuous manner, the whole circumferential area (e.g., circumferential surface) of the filter drum can be, e.g., will be, successively immerged into the solid liquid suspension which is present in the basin. The liquid can, e.g., radially (with respect to the filter drum longitudinal-axis) pass through the filter medium and the drum circumferential-wall from the outside and can get into conduits (e.g. tubes) of the pressure and/or vacuum filter device, which (conduits) are arranged in the interior of the filter drum (inner tubing) and via which conduits the liquid is discharged from the filter drum in a controlled manner (e.g., via a control head which is arranged on an axial end portion of the filter drum and which, e.g, is provided in form of a control disk assembly). The conduits can, e.g., be individually pressurized by means of a vacuum and/or pressure generating device of the pressure and/or vacuum filter device in order to, e.g., effect and/or control and/or amplify a filtration (e.g., via applying a vacuum to the conduits (= vacuum filtration), and/or in order to, e.g., supply a pressure fluid via the conduits for blowing off filter cake sticking on the outer circumferential area (e.g. outer circumferential surface). Alternatively or additionally to the vacuum application to the conduits, pressure can be applied to the suspension which is present in the basin (= pressure filtration) in order to thereby be radially forced inwardly through the filter medium. To this end, e.g., the filter drum and the basin may be arranged in a sealed casing of the pressure and/or vacuum filter device, within which, with respect to the conduits, a larger pressure will be and/or can be established.

E.g., one or more intermediate pieces, e.g., one or more filter cell insertion parts, may be arranged between the filter medium and the outer side of the filter drum circumferential-wall, which leaves/leave intermediate spaces between the radial inner side of the filter medium and the (radial) outer side of the filter drum circumferential-wall, via which the liquid, which is separated from the solid in connection with the filtering process, is guided along the outer side of the filter drum circumferential-wall to conduits (e.g., tubes) which are attached to the outer side of the filter drum (outer tubing). Such filter cell insertion parts may also be used as a drainage device in case of an inner tubing, via which (cell insertion parts) the liquid is guided to the conduits.

The respective (e.g. each) longitudinal-edge receiving groove access opening and/or the respective (e.g. each) transverse-edge receiving groove access opening radially (with respect to the filter drum longitudinal-axis) faces toward the outside and/or is radially open towards the outside and/or is radially exposed towards the outside and can thereby be accessed.

The filter drum circumferential-wall may be divided in a plurality of filter cells, to which a respective filter medium piece is respectively assigned. The filter cells may be separated from each other in circumferential direction of the filter drum, e.g., by means of the longitudinal-edge receiving grooves and may be limited in longitudinal direction of the filter drum (that is, along the filter drum longitudinal-axis) by transverse-edge receiving grooves which will be discussed in further detail below. Alternatively, such a transverse-edge receiving groove may only be formed at a respective longitudinal end of the filter drum, whereby, e.g., a/the respective filter medium piece continuously extends from one longitudinal end portion of the filter drum to the opposite other longitudinal end portion of the filter drum.

A respective filter cell insertion part may be arranged between the respective filter medium piece and the filter drum circumferential-wall, which (filter cell insertion part) is a part of the pressure and/or vacuum filter device and which, e.g., is assigned to the respectively assigned filter cell and on and/or by which the corresponding filter medium piece is radially supported and which itself is supported on the outer side of the filter drum circumferential-wall. The respective (e.g. each) filter cell insertion part may be used and/or provided in a manner as an above-described intermediate piece. The respective (e.g. each) filter cell insertion part is radially (with respect to the filter drum longitudinal-axis) liquid permeable. The filter cell insertion parts may be connected to each other, e.g., via separation ledges which extend along the filter drum longitudinal-direction, and/or via ring ledges which extend in circumferential direction of the filter drum around (e.g., completely around) the filter drum, wherein the respective longitudinal-edge receiving groove may be formed in a respectively assigned separation ledge and/or wherein the respective transverse-edge receiving groove may be formed in a respective ring ledge. E.g., the separation ledges and/or the ring ledges are part of the filter drum and/or are fixedly connected to the filter drum. One or more of the longitudinal-edge holding bodies or the respective longitudinal-edge holding body may be formed by a rigid cylindrical rod or by a flexible string or a flexible round cord or by a cylindrical helix-structure with a helix-structure cross-section transverse to the longitudinal-edge holding body longitudinal-direction, which, with respect to the longitudinal-edge holding body longitudinal-axis, is/are angular flexible and is/are rigid in radial direction of its helix-structure cross-section.

The (said) plurality of fixation devices may further comprise a plurality of elongated transverse-edge receiving grooves which each (e.g., respectively) define a transverse-edge receiving groove longitudinal-axis and (each) have an elongated transverse-edge receiving groove access opening, which extends along the transverse-edge receiving groove longitudinal-axis, and which are formed on the filter drum circumferential-wall and extend with their (respective) transverse-edge receiving groove longitudinal-axis in (a) circumferential direction of the filter drum as well as are spaced from each other in longitudinal direction of the filter drum and into which the filter medium piece transverse-edges engage via the correspondingly assigned transverse-edge receiving groove access opening, wherein the respective transverse-edge receiving groove is provided, with respect to the transverse-edge receiving groove longitudinal-axis, at both sides with a respective elongated undercut which (e.g., at least for the most part continuously) extends along the transverse-edge receiving groove longitudinal-axis and which is assigned to a respective filter medium piece transverse-edge, wherein the respective filter medium piece transverse-edge is at least for the most part continuously provided with a filter medium transverse edge reinforcement which is flat ribbon shaped and which is arranged adjacently to a front face of the filter medium piece transverse-edge and on the filter medium piece transverse-edge and which is patched to the filter medium piece transverse-edge (e.g., by means of suturing and/or gluing (e.g. is fixed thereto by means of a suture seam and/or a glue seam)), wherein the respective filter medium piece transverse-edge together with its flat ribbon shaped filter medium transverse-edge reinforcement is arranged in the respectively assigned undercut, and wherein the plurality of fixation devices further comprises/comprise a plurality of elongated transverse-edge holding bodies which respectively (e.g., each) define a transverse-edge holding body longitudinal-axis and which are received in a respectively assigned transverse-edge receiving groove and extend with their transverse-edge holding body longitudinal-axis parallel to the transverse-edge receiving groove longitudinal-axis of the corresponding transverse-edge receiving groove and which respectively (e.g. each) have a transverse-edge holding body cross-sectional diameter which is larger than the width of the transverse-edge receiving groove access opening of the corresponding transverse-edge receiving groove to thereby hold the respective filter medium piece transverse-edge together with its flat ribbon shaped filter medium transverse-edge reinforcement in the respectively assigned undercut (e.g., at least in a form-fit manner or in a form-and-force-fit manner).

The respective (e.g., each) filter medium longitudinal-edge reinforcement and/or the respective filter medium transverse-edge reinforcement is, e.g., formed as a (respective) elongated reinforcement flat ribbon which defines a reinforcement flat ribbon longitudinal-axis and which extends with its reinforcement flat ribbon longitudinal-axis (at least substantially continuously) parallel to and/or along the corresponding filter medium piece longitudinal-edge and/or the corresponding filter medium piece transverse-edge.

One or more of the transverse-edge holding bodies or the respective transverse-edge holding body may, e.g., be formed by a flexible string or a flexible round cord or may, e.g., also be formed by a (e.g., cylindrical) helix-structure which has a helix-structure cross-section transverse to the transverse-edge holding body longitudinal-direction and which (helix-structure) is angular flexible with respect to the transverse-edge holding body longitudinal-axis and is rigid in radial direction of its helix-structure cross-section.

The helix-structure of the respective transverse-edge holding body and/or of the respective longitudinal-edge holding body may, e.g., be made of a metal material (e.g., a steel material) or of a plastic material, such as, e.g., of a metal or plastic wire which is bend and/or extends around the transverse-edge holding body longitudinal-axis and/or around the longitudinal-edge holding body longitudinal-axis, respectively, in a helical manner (wherein it keeps a (substantially) equal (e.g. same) helix-structure cross-sectional diameter). The radial rigidity of the respective helix-structure is, e.g., (determined) such that the helix-structure cannot automatically (via radial deformation) get out of the corresponding longitudinal-edge receiving groove and/or out of the corresponding transverse-edge receiving groove via the respective longitudinal-edge receiving groove access opening and/or via the respective transverse-edge receiving groove access opening, respectively.

The respective elongated longitudinal-edge holding body may, e.g., be axially (in direction of the filter drum longitudinal-axis and/or along the corresponding longitudinal-edge receiving groove longitudinal-axis) inserted (e.g., in a sliding manner) into the respectively assigned longitudinal-edge receiving groove, for which, e.g., a respectively assigned longitudinal-edge holding body insertion opening is formed and/or is provided at a front face of the filter drum. Also, the respective elongated transverse-edge holding body may be, e.g., axially, (along the corresponding transverse-edge receiving groove longitudinal-axis) inserted (e.g., in a sliding manner) into the respectively assigned transverse-edge receiving groove, for which, e.g., the transverse-edge receiving groove is enlarged in width at a determined location to thereby form a transverse-edge holding body insertion opening.

At least one or more of the filter medium longitudinal-edge reinforcements or the respective filter medium longitudinal-edge reinforcement and/or at least one or more of the filter medium transverse-edge reinforcements or the respective filter medium transverse-edge reinforcement are/is, e.g., formed by the filter cloth material of the corresponding filter medium piece and formed as (a respective) hem (e.g., tuck) which is formed by one-time or multiple-times inwardly folding of the filter cloth material (of the corresponding filter medium piece) along the (corresponding) filter medium piece longitudinal-edge and/or along the (corresponding) filter medium piece transverse-edge. Hence, in this arrangement, before patching (e.g., suturing and/or gluing) the hem to the filter medium piece longitudinal edge and/or to the filter medium piece transverse edge, the hem is connected to the filter medium piece longitudinal-edge and/or to the filter medium piece transverse edge, respectively, in a non-patched manner (that is, in a seamless (e.g., sutureless and glueless) manner), whereby, e.g., with exception of a sewing thread and/or a glue seam (or another fixation means, such as, e.g., also a rivet), which is required to suture/glue(/rivet) the folded hem onto the filter medium piece longitudinal-edge and/or onto the filter medium piece transverse-edge, respectively, additional reinforcement material can be omitted.

But it is also possible that at least one or more filter medium longitudinal-edge reinforcements or the respective filter medium longitudinal-edge reinforcement and/or at least one or more of the filter medium transverse-edge reinforcements or the respective filter medium transverse-edge reinforcement is/are formed by a reinforcement material which is separate from the filter cloth material, wherein optionally the reinforcement material is made of a cloth material which corresponds to (is same as) the filter cloth material and/or is made of a PTFE material.

The respective filter medium longitudinal-edge reinforcement is, e.g., arranged on a radial inner side, with respect to the filter drum longitudinal-axis, of the corresponding filter medium piece, and/or the respective filter medium transverse-edge reinforcement is, e.g., arranged on a radial inner side, with respect to the filter drum longitudinal-axis, of the corresponding filter medium piece. Thereby, e.g., the filter medium longitudinal-edge reinforcement and/or the filter medium transverse-edge reinforcement may be more easily get into the corresponding undercut, whereby the corresponding filter medium piece can be and/or is more reliably fixed to the filter drum.

In this application, the term "for the most part" means, e.g., at least more than 50% or at least 70% or at least 80% or at least 90% or at least 95%, and the term "substantially" means, e.g., at least 90% or at least 95% or 100% minus regular tolerances.

In the following, the invention will be explained by means of exemplary embodiments with reference to the drawings. In the drawings:
Figure 1 schematically shows a pressure and/or vacuum filter device according to an embodiment of the invention in a longitudinal section,
Figure 2 schematically shows a perspective view of a filter drum of the pressure and/or vacuum filter device according to an embodiment of the invention in a partially cut-off manner,
Figures 3 and 4 respectively show a cross-section of a filter cell of the filter drum of the pressure and/or vacuum filter device according to embodiments of the invention transverse to the filter drum longitudinal-axis,
Figure 5 schematically shows a perspective view of a separation ledge of the pressure and/or vacuum filter device according to an embodiment of the invention, having a longitudinal-edge receiving groove and with a longitudinal-edge holding body received therein,
Figure 6 shows a cross-section of the separation ledge of

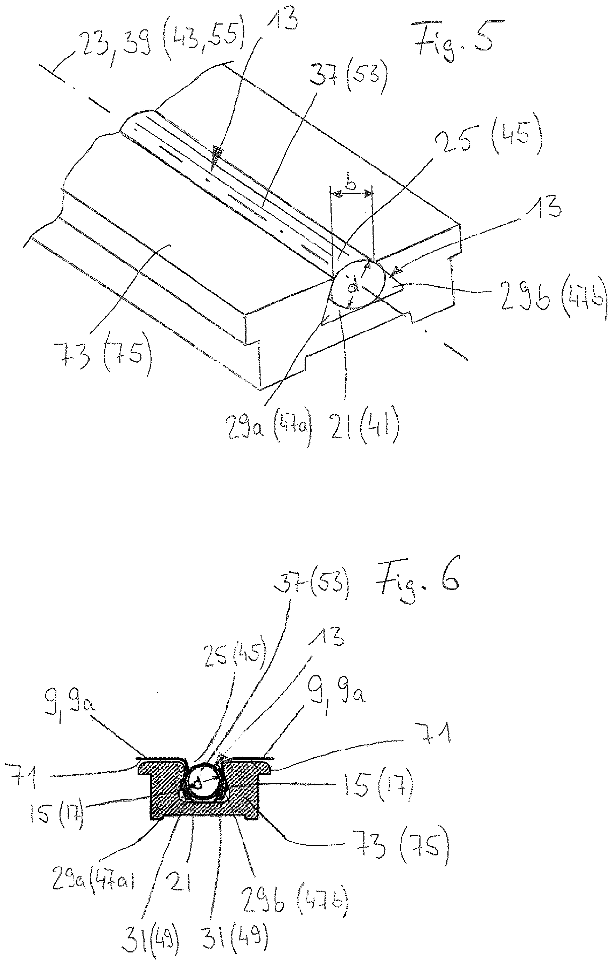

Figure 5 transverse to the longitudinal-edge receiving groove longitudinal-axis, with, in addition, filter medium piece longitudinal-edges inserted in the longitudinal-edge receiving groove according to an embodiment of the invention.

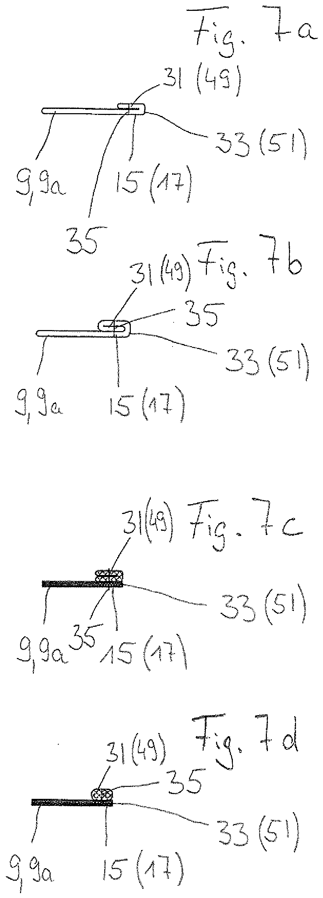

Figures 7a-7d show cross-sections of longitudinal-edge reinforcements which are ribbon shaped according to diverse embodiments of the invention, and

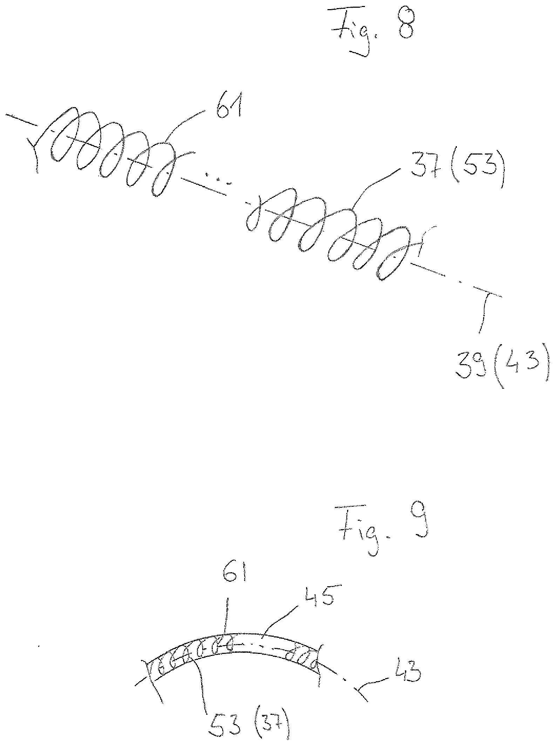

Figures 8 and 9 show a longitudinal-edge holding body and a transverse edge holding body, respectively, of a fixation device of the pressure and/or vacuum device according to an embodiment of the invention.

In the figures the same reference signs will be used for the same parts.

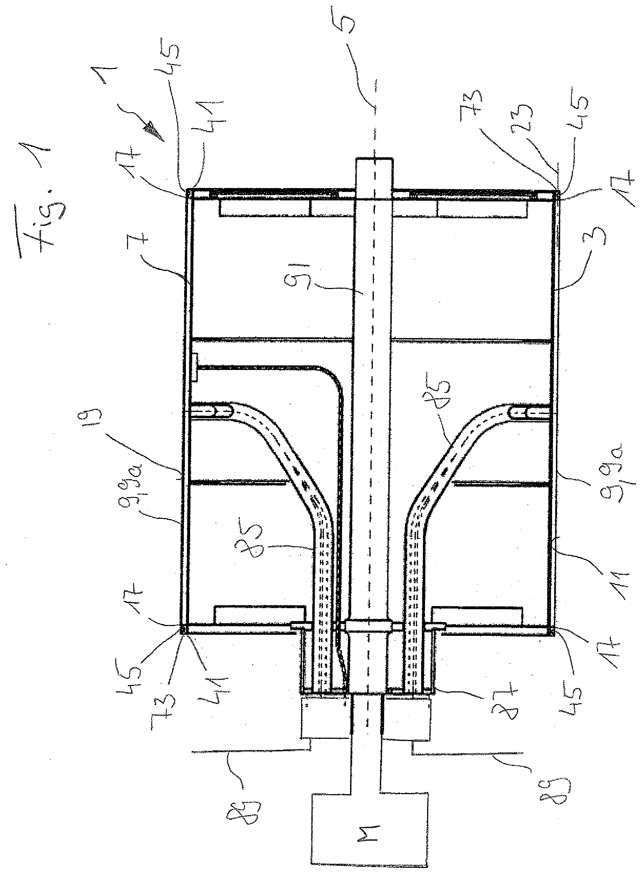

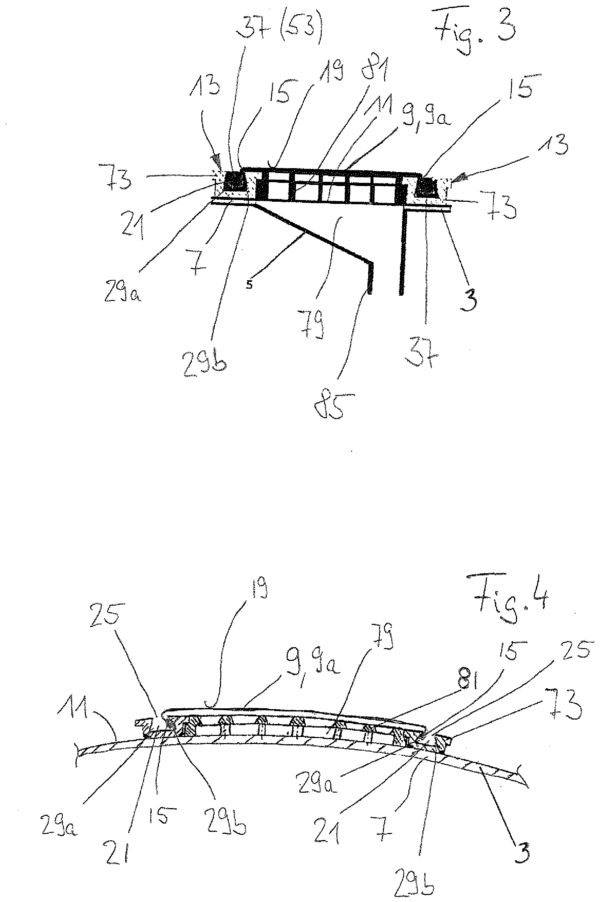

With reference to figures 1-9, a pressure and/or vacuum filter device 1 according to an embodiment of the invention comprises: a filter drum 3, which defines a filter drum longitudinal-axis 5 (defining a filter drum longitudinal-direction) and which comprises a filter drum circumferential-wall 7 which extends around the filter drum longitudinal-axis 5, a filter medium 9, which is arranged on an outer side 11 of the filter drum circumferential-wall 7, and a plurality of fixation devices 13 (see, e.g., Fig. 3), by means of which the filter medium 9 is fixedly attached to the filter drum circumferential-wall 7, wherein the filter medium 9 comprises a plurality of filter medium pieces 9 which are separate from each other and which respectively (e.g. each) are made (e.g., at least for the most part seamless) of a filter cloth material und which respectively (e.g., each) have filter medium piece longitudinal-edges 15, which are arranged opposite (in direction transverse to the filter drum longitudinal-axis 5) to each other and which are at least for the most part a non-patched and/or seamless part of the (corresponding) filter cloth material and/or of the (corresponding) filter medium piece 9, as well as filter medium piece transverse-edges 17 which are arranged opposite (in filter drum longitudinal-direction) to each other and which at least for the most part are a non-patched and/or seamless component of the (corresponding) filter cloth material and/or filter medium-piece 9, and which (filter medium pieces 9) extend with their filter medium piece longitudinal-edges 15 parallel to the filter drum longitudinal axis 5 as well as in a manner to be adjacent to each other, thereby forming an at least for the most part complete (e.g., closed) filter medium surface 19, wherein the plurality of fixation devices 13 comprises/comprise a plurality (which, e.g., corresponds to the plurality of fixation devices 13) of elongated longitudinal-edge receiving grooves 21 (see also Figures 5 and 6) which respectively (e.g., each) define a longitudinal-edge receiving groove longitudinal-axis 23 and have an elongated longitudinal-edge receiving groove access opening 25, which extends along the longitudinal-edge receiving groove longitudinal-axis 23, and which are formed on the filter drum circumferential-wall 7 and which extend with their longitudinal-edge receiving groove longitudinal-axis 23 parallel to the filter drum longitudinal-axis 5 as well as are spaced from each other in circumferential direction 27 of the filter drum 3 and into which respectively two (respective) filter medium piece longitudinal edges 15, which are adjacent to each other, engage via the corresponding longitudinal-edge receiving groove access opening 25, wherein the respective longitudinal-edge receiving groove 21 is formed, with respect to the longitudinal-edge receiving groove longitudinal-axis 23, on both sides with a respective elongate undercut 29a, 29b which extends along the longitudinal-edge receiving groove longitudinal-axis 23 und which is assigned to a respective filter medium piece longitudinal-edge 15, wherein the respective filter medium piece longitudinal-edge 15 is provided, at least for the most part in a continuous manner, with a filter medium longitudinal-edge reinforcement 31 which is flat ribbon shaped and which is arranged adjacently to a front face 33 of the filter medium piece longitudinal-edge 15 and on the filter medium piece longitudinal-edge 15 and which is patched to the filter medium piece longitudinal-edge 15, in this case, e.g., is fixed to the filter medium piece longitudinal-edge 15 by means of suturing (and/or by means of a suture seam (or a plurality of seams) 35) (cf., e.g., Figs. 7a-7d), wherein the respective filter medium piece longitudinal-edge 15 together with its flat ribbon shaped filter medium longitudinal-edge reinforcement 31 is arranged in the respectively assigned undercut 29a, 29b, and wherein the plurality of fixation devices 13 further comprises/comprise a plurality of elongated longitudinal-edge holding bodies 37 which respectively define a longitudinal-edge holding body longitudinal-axis 39 and which are received in a respectively assigned longitudinal-edge receiving groove 21 (of the longitudinal-edge receiving grooves 21) and which extend with their longitudinal-edge holding body longitudinal-axis 39 parallel to the longitudinal-edge receiving groove longitudinal-axis 23 of the corresponding longitudinal-edge receiving groove 21 and which respectively (e.g., each) have a longitudinal-edge holding body cross-sectional diameter d which is larger than a width of the longitudinal-edge receiving groove access opening 25 of the corresponding longitudinal-edge receiving groove 21 to thereby hold the respective filter medium piece longitudinal edge 15 together with its flat ribbon shaped filter medium longitudinal-edge reinforcement 31 in the respectively assigned undercut 29a, 29b.

The (said) plurality of fixation devices 13, e.g., further comprises a plurality of elongated transverse-edge receiving grooves 41 (see the references, put in parentheses, in Fig. 5) (wherein, e.g., the plurality of longitudinal-edge receiving grooves 21 plus the plurality of transverse-edge receiving grooves 41 corresponds to (the number of) the plurality of fixation devices 13), which respectively (e.g., each) define a transverse-edge receiving groove longitudinal-axis 43 and have an elongated transverse-edge receiving groove access opening 45, which extends along the transverse-edge receiving groove longitudinal-axis 43, and which are formed on the filter drum circumferential wall 7 and extend with their transverse-edge receiving groove longitudinal-axis 41 in (a) circumferential direction 27 of the filter drum 3 as well are spaced from each other in longitudinal direction (in direction of the filter drum longitudinal-axis 5) of the filter drum 3 and into which the filter medium piece transverse-edges 17 engage via the corresponding transverse-edge receiving groove access opening 45.

The respective transverse-edge receiving groove 45 may be formed correspondingly to the (respective) longitudinal-edge receiving groove (so that in this regard, it is referred to Figs. 5-7d, in which the features of the transverse-edge receiving groove 45 are identified by references signs which are put in parentheses) and may therefore be formed, with respect to the transverse-edge receiving groove longitudinal axis 45, on both sides with a respective elongated undercut 47a, 47n which extends along the transverse-edge receiving groove longitudinal-axis 43 and which is assigned to a respective filter medium piece transverse-edge 17, wherein the respective filter medium piece transverse-edge 17 is, at least for the most part continuously, provided with a filter medium transverse-edge reinforcement 49 which is flat ribbon shaped and which is arranged adjacently to a front face 51 of the filter medium piece transverse-edge 17 and on the filter medium piece transverse edge 17 and is patched to the filter medium piece transverse edge 17, in this case, e.g., is fixed to the filter medium piece transverse-edge 17 by means of suturing, wherein the respective filter medium piece transverse-edge 17 together with its flat ribbon shaped filter medium transverse-edge reinforcement 49 is arranged in the respectively assigned undercut 47a, 47b, and wherein the plurality of fixation devices 13 further comprise/comprises a plurality of elongated transverse-edge holding bodies 53 (see reference signs, put in parentheses, in Figs. 3, 5 and 6), which respectively (e.g., each) define a transverse-edge holding body longitudinal axis 55 and which are received in a respectively assigned transverse-edge receiving groove 41 and extend with their transverse-edge holding body longitudinal-axis 55 parallel to the transverse-edge receiving groove longitudinal-axis 43 of the corresponding transverse-edge receiving groove 41 and which respectively (e.g., each) have a transverse-edge receiving body cross-sectional diameter d which is larger than a width b of the transverse-edge receiving groove access opening 45 of the corresponding transverse-edge receiving groove 41 to thereby hold the respective filter medium piece transverse-edge 17 together with its flat ribbon shaped filter medium transverse-edge reinforcement 49 in the respectively assigned undercut 47a, 47b.

Figs. 8 and 9 show a holding body which can be used as longitudinal-edge holding body 37 or (as well as) as transverse-edge holding body 53 und which is formed by a helix-structure 61 of, e.g., a wire, which (helix structure 61) has a helix-structure cross-section transverse to the longitudinal-edge/transverse-edge holding body longitudinal-axis 37, 43 and which helix-structure 61 is angular flexible with respect to the longitudinal-edge/transverse-edge holding body longitudinal-axis 39, 43 and is rigid in radial direction of its helix-structure cross-section.

Thus, the helix-structure 61 can be longitudinally inserted into the transverse-edge receiving groove 45, which extends in circumferential direction of the filter drum 3, and can, because of its angular flexibility, easily follow the curvature of the transverse-edge receiving groove 45 (cf. Fig. 9), wherein, however, because of its rigid cross-section and/or because of the radial rigidity of the individual turns, e.g. individual coils or loops, of the helix structure 61, the helix structure 61 and/or, e.g., the longitudinal-edge holding body 37 or the transverse-edge holding body 53 formed by the helix structure 61, cannot get out of the corresponding longitudinal-edge receiving groove 21 or of the transverse-edge receiving groove 41, respectively, via the longitudinal-edge receiving groove access opening 25 or the transverse-edge access opening 45, respectively.

Figures 7a to 7d respectively show, in a cross-section, filter medium longitudinal-edge reinforcements 33 and/or filter medium transverse-edge reinforcements 41 according to diverse embodiments of the invention.

In the embodiments of Figs. 7a and 7, there are one or more of the filter medium longitudinal-edge reinforcements 31 or is the respective filter medium longitudinal-edge reinforcement 31 and/or are one or more of the filter medium transverse-edge reinforcements 49 or is the respective filter medium transverse-edge reinforcement 49 formed by the filter cloth material of the corresponding filter medium piece 9a and formed as a hem (e.g. tuck) which is formed by one-time (Fig. 7a) or by multiple-times (Fig. 7b) inwardly folding of the filter cloth material along the corresponding filter medium piece longitudinal-edge 16 or along the corresponding filter medium piece transverse-edge 17, respectively.

In the embodiments of Fig. 7c and 7d, there are one or more of the filter medium longitudinal reinforcements 31 or is the respective filter medium longitudinal-edge reinforcement 31 and/or are one or more of the filter medium transverse-edge reinforcements 49 or is the respective filter medium transverse-edge reinforcement 49 formed by a reinforcement material which is separate from the filter cloth material, wherein, optionally, the reinforcement material is made of a cloth material, which corresponds to the filter cloth material, or is made of a PTFE-material, and wherein the reinforcement material is, e.g., one-time (Fig. 7c) or multiple-times folded along the filter medium piece longitudinal-edge 16 and/or along the corresponding filter piece medium piece transverse-edge 17, wherein, e.g., regarding one-time folding and/or reverting, the folding legs face away from the front face 33(51) of the corresponding filter medium piece longitudinal-edge 15 or the corresponding filer medium piece transverse-edge 17, respectively, in an inward direction (see Fig. 7c).

According to Fig. 7d, the filter medium longitudinal-edge reinforcement 31 and/or the filter medium transverse-edge reinforcement 49 is/are, e.g., formed as a non-folded reinforcement ribbon.

In all embodiments (e.g., according to Figs. 7a-7d), the respective ribbon-shaped filter medium longitudinal-edge reinforcement 31 and/or the respective filter medium transverse-edge reinforcement 49 is elongated and extends with its longitudinal-axis along the respectively assigned filter medium longitudinal edge receiving groove 21 and/or filter medium transverse-edge receiving groove 41, respectively.

As can be seen from Fig. 6, the respective filter medium longitudinal-edge reinforcement 31 and/or the respective filter medium transverse-edge reinforcement 49 is arranged, with respect to the filter drum longitudinal-axis 5, on a radial inner side 71 of the corresponding filter medium piece 9a.

The longitudinal-edge receiving grooves 21 are, e.g., formed in respectively assigned separation ledges 73 which are formed and/or are arranged on the outer side 11 of the filter drum 3 (and on the filter drum 3) and which extend along and/or parallel to the filter drum longitudinal-axis 5.

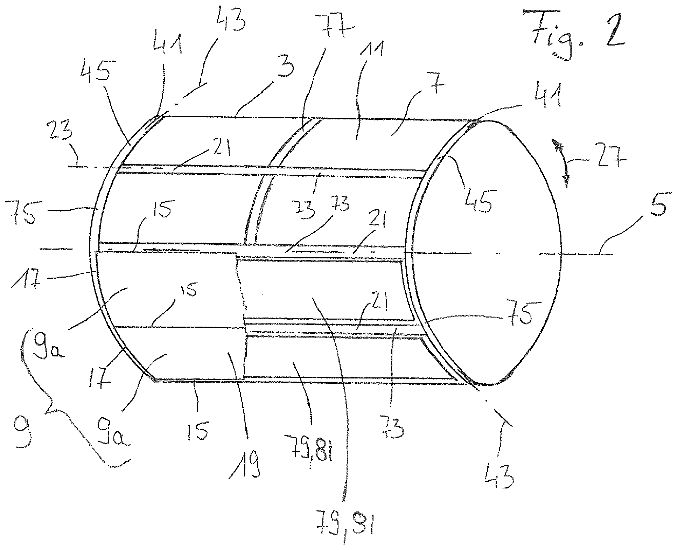

The transverse-edge receiving grooves 41 are, e.g., formed in respectively assigned ring ledges 75 which extend around the outer circumference of the filter drum 3 in an encircling manner and which, e.g., are arranged at a respective axial end portion of the filter drum 3 (see, e.g., Figs. 1 and 2). The cross-section of the respective ring ledge 75 may, e.g., be formed in the same shape as the cross-cross section of the separation ledge 73 or may be formed similar thereto (cf., e.g., separation ledge cross-sections of Figs. 3-6).

In the embodiment of Fig. 2, an additional ring ledge 77 is provided on the filter drum 3, in which, however, no transverse-edge receiving groove is formed, but which is, without interruption and/or continuously, superposed (along the filter drum longitudinal-axis 5) by a respective filter medium piece 9a.

The separation ledges 73 are spaced, e.g. by regular distances, from each other in circumferential direction 27 of the filter drum 3, and the ring ledges 75 are spaced from each other in filter drum longitudinal-direction (along the filter drum longitudinal-axis 5).

The separation ledges 73 and the ring ledges 75, e.g., delimit respective filter cells 79 which, e.g., respectively (e.g. each) comprise a respectively assigned filter cell insertion part 81 which is arranged between the outer side 11 of the filter drum 3 and the respectively assigned filter medium piece 9a and which forms a drainage space for the liquid separated from the suspension in connection with the filtering process, and a funnel-shaped collecting portion 83, to which a conduit (e.g. a tube) 85 is connected for discharging the separated liquid out of the filter cell 79 as well as out of the filter drum 3.

In the embodiment of Fig. 1, the conduits 85 are guided within the interior of the filter drum 3 to the front end of the filter drum 3 to a control head 87 which is arranged on said front end of the filter drum 3, via which (control head 87) the conduits 85 are connected to schematically shown discharge lines 89. The filter drum 3 is further connected to a central drive shaft 91 of the pressure and/or vacuum filter device 1, which (drive shaft 91) is itself connected to a drive motor M for rotationally driving the filter drum 3 about its filter drum longitudinal-axis 5.

### List of Reference Signs

1 pressure and/or vacuum filter device
3 filer drum
5 filter drum longitudinal-axis
7 filter drum circumferential-wall
9 filter medium
9a filter medium piece
11 outer side of filter drum
13 fixation device
15 filter medium piece longitudinal-edge
17 filter medium piece transverse-edge
19 filter medium surface
21 longitudinal-edge receiving groove
23 longitudinal-edge receiving groove longitudinal-axis
25 longitudinal-edge receiving groove access opening
27 circumferential direction of the filter drum
29a, 29b undercut of the longitudinal-edge receiving groove
31 filter medium longitudinal-edge reinforcement
33 front face of the filter medium piece longitudinal-edge
35 seam
37 longitudinal-edge holding body
39 longitudinal-edge holding body longitudinal-axis
41 transverse-edge receiving groove
43 transverse-edge receiving groove longitudinal-axis
45 transverse-edge receiving groove access opening
47a/47b undercut of the transverse-edge receiving groove
49 filter medium transverse-edge reinforcement
51 front face of the filter medium piece transverse-edge
53 transverse-edge holding body
55 transverse-edge holding body longitudinal-axis
61 helix-structure
71 radially inner side of the filter medium piece
73 separation ledge
75 ring ledge
77 additional ring ledge
79 filter cell
81 filter cell insertion part
83 collecting portion
85 conduit
87 control head
89 discharge line
91 drive shaft

## Claims

1. Pressure and/or vacuum filter device (1), comprising
- a filter drum (3) which defines a filter drum longitudinal-axis (5) and which comprises a filter drum circumferential-wall (7) which extends around the filter drum longitudinal-axis (5),
- a filter medium (9) which is arranged on an outer side (11) of the filter drum circumferential-wall (7), and
- a plurality of the fixation devices (13), by means of which the filter medium (9) is fixedly attached to the filter drum circumferential-wall (7), wherein
- the filter medium (9) comprises a plurality of filter medium pieces (9a) which are separate from each other and which each are made of a filter cloth material und which each have filter medium piece longitudinal-edges (15), which are arranged opposite to each other and which are at least for the most part a non-patched part of the filter cloth material, as well as filter medium piece transverse-edges (17), which are arranged opposite to each other, and which extend with their filter medium piece longitudinal-edges (15) parallel to the filter drum longitudinal-axis (5) as well as adjacently to each other to thereby form an at least for the most part complete filter medium surface (19), wherein
- the plurality of fixation devices (13) comprises a plurality of elongated longitudinal-edge receiving grooves (21) which each define a longitudinal-edge receiving groove longitudinal-axis (23) and each have an elongated longitudinal-edge receiving groove access opening (25), which extends along the longitudinal-edge receiving groove longitudinal-axis (23), and which are formed on the filter drum circumferential-wall (7) and extend with their longitudinal-edge receiving groove longitudinal-axis (23) parallel to the filter drum longitudinal-axis (5) as well as are spaced from each other in circumferential direction (27) of the filter drum (3) and into which two filter medium piece longitudinal-edges (15), which are adjacent to each other, respectively engage via the corresponding longitudinal-edge receiving groove access opening (25), wherein
- the respective longitudinal-edge receiving groove (21) is formed, with respect to the longitudinal-edge receiving groove longitudinal-axis (23), on both sides with a respective elongated undercut (29a, 29b), which extends along the longitudinal-edge receiving groove longitudinal-axis (23) and which is assigned to a respective filter medium piece longitudinal-edge (15), wherein
- the respective filter medium piece longitudinal-edge (15) is at least for the most part continuously provided with a filter medium longitudinal-edge reinforcement (31) which is flat ribbon shaped and which is arranged adjacently to a front face (33) of the filter medium piece longitudinal-edge (15) and on the filter medium piece longitudinal-edge (15) and which is patched to the filter medium piece longitudinal-edge (15),
- wherein the respective filter medium piece longitudinal-edge (15) together with its flat ribbon shaped filter medium longitudinal-edge reinforcement (31) is arranged within the respectively assigned undercut (29a, 29b), and wherein
- the plurality of fixation devices (13) further comprises a plurality of elongated longitudinal-edge holding bodies (37), which each define a longitudinal-edge holding body longitudinal-axis (39) and which are received in a respectively assigned longitudinal-edge receiving groove (21) and which extend with their longitudinal-edge holding body longitudinal-axis (39) parallel to the longitudinal-edge receiving groove longitudinal-axis (23) of the corresponding longitudinal-edge receiving groove (21) and which each have a longitudinal-edge holding body cross-sectional diameter (d) which is larger than a width (b) of the longitudinal-edge receiving groove access opening (25) of the corresponding longitudinal-edge receiving groove (21) to thereby hold the respective filter medium piece longitudinal-edge (15) together with its flat ribbon shaped filter medium piece longitudinal-edge reinforcement (31) within the respectively assigned undercut (29a, 29b).

2. Pressure and/or vacuum filter device (1) according to claim 1, wherein one or the respective longitudinal-edge holding body (37) is formed by a rigid cylindrical rod or by a flexible string or a flexible round cord or by a cylindrical helix-structure (61) which has a helix-structure cross-section transverse to the longitudinal-edge holding body longitudinal-axis (39) and which, with respect to the longitudinal-edge holding body longitudinal-axis (39), is angular flexible and is rigid in radial direction of its helix-structure cross-section.

3. Pressure and/or vacuum filter device (1) according to one of claims 1 to 2, wherein the plurality of fixation devices (13) further comprises a plurality of elongated transverse-edge receiving grooves (41) which each define a transverse-edge receiving groove longitudinal-axis (43) and each have an elongated transverse-edge receiving groove access opening (45), which extends along the transverse-edge receiving groove longitudinal-axis (43), and which are formed on the filter drum circumferential-wall (7) and extend with their respective transverse-edge receiving groove longitudinal-axis (43) in a circumferential direction (27) of the filter drum (3) as well as are spaced from each other in longitudinal direction of the filter drum (3) and into which the filter medium piece transverse-edges (17) engage via the corresponding transverse-edge receiving groove access opening (45), wherein
- the respective transverse-edge receiving groove (41) is provided, with respect to the transverse-edge receiving groove longitudinal-axis (43), at both sides with a respective elongated undercut (47a, 47b) which extends along the transverse-edge receiving groove longitudinal-axis (43) and which is assigned to a respective filter medium piece transverse edge (17), wherein
- the respective filter medium piece transverse edge (17) is at least for the most part continuously provided with a filter medium transverse-edge reinforcement (49) which is flat ribbon shaped and which is arranged adjacent to a front face (51) of the filter medium piece transverse-edge (17) on the filter medium piece transverse-edge and which is patched to the filter medium piece transverse-edge (17), wherein
- the respective filter medium piece transverse-edge (17) together with its flat ribbon shaped filter medium transverse-edge reinforcement (49) is arranged in the respectively assigned undercut (47a, 47b), and wherein
- the plurality of fixation devices (13) further comprises a plurality of elongated transverse-edge holding bodies (53) which respectively define a transverse-edge holding body longitudinal-axis (55) and which are received in a respectively assigned transverse-edge receiving groove (41) and extend with their transverse-edge holding body longitudinal-axis (55) parallel to the transverse-edge receiving groove longitudinal-axis (43) of the corresponding transverse-edge receiving groove (41) and which respectively have a transverse-edge holding body cross-sectional diameter (d) which is larger than a width (b) of the transverse-edge receiving groove access opening (45) of the corresponding transverse-edge receiving groove (41) to thereby hold the respective filter medium piece transverse-edge (17) together with its flat ribbon shaped filter medium transverse-edge reinforcement (49) in the respectively assigned undercut (47a, 47b) .

4. Pressure and/or vacuum filter device (1) according to claim 3, wherein one or the respective transverse-edge holding body (53) is formed by a flexible string or a flexible round cord or by a helix-structure (61) which has a helix-structure cross-section transverse to the transverse-edge holding body longitudinal-axis (43) and which is angular flexible with respect to the transverse-edge holding body longitudinal-axis (43) and is rigid in radial direction of its helix-structure cross-section.

5. Pressure and/or vacuum filter device (1) according to one of claims 1 to 4, wherein at least one or the respective filter medium longitudinal-edge reinforcement (31) and/or wherein at least one or the respective filter medium transverse-edge reinforcement (49) is formed by the filter cloth material of the corresponding filter medium piece (9a) and is formed as a hem which is formed by one-time or multiple-times inwardly folding of the filter cloth material along the corresponding filter medium piece longitudinal-edge (15) and/or along the corresponding filter medium piece transverse-edge (17), respectively.

6. Pressure and/or vacuum filter device (1) according to one of claims 1 to 5, wherein at least one or the respective filter medium longitudinal-edge reinforcement (31) and/or wherein at least one or the respective filter medium transverse-edge reinforcement (49) is formed by a reinforcement material which is separate from the filter cloth material, wherein optionally the reinforcement material is made of a cloth material which corresponds to the filter cloth material and/or is made of a PTFE material.

7. Pressure and/or vacuum filter device (1) according to one of claims 1 to 6, wherein the respective filter medium longitudinal-edge reinforcement (31) is arranged, with respect to the filter drum longitudinal-axis (5), on a radial inner side of the corresponding filter medium piece (9a),

8. Pressure and/or vacuum filter device (1) according to one of claims 1 to 7 in combination with claim 3, wherein the respective filter medium transverse-edge reinforcement (49) is arranged, with respect to the filter drum longitudinal-axis (5), on a radial inner side of the corresponding filter medium piece (9a).

## Patentansprüche

1. Druck- und/oder Vakuumfiltervorrichtung (1), aufweisend:
- eine Filtertrommel (3), die eine Filtertrommellängsachse (5) definiert und die eine Filtertrommelumfangswand (7) hat, die sich um die Filtertrommellängsachse (5) erstreckt,
- ein Filtermedium (9), welches an einer Außenseite (11) der Filtertrommelumfangswand (7) angeordnet ist, und
- eine Mehrzahl von Befestigungsvorrichtungen (13), mittels derer das Filtermedium (9) fest an der Filtertrommelumfangswand (7) angebracht ist, wobei
- das Filtermedium (9) eine Mehrzahl von voneinander separaten Filtermedium-Stücken (9a) aufweist, die jeweils aus einem Filtertuchmaterial gemacht sind und die jeweils einander gegenüberliegende Filtermedium-Stück-Längsränder (15), welche zumindest größtenteils nicht angestückter Bestandteil des Filtertuchmaterials sind, sowie einander gegenüberliegende Filtermedium-Stück-Querränder (17) haben und die sich mit ihren Filtermedium-Stück-Längsrändern (15) parallel zur Filtertrommellängsachse (5) sowie aneinander angrenzend erstrecken unter Ausbildung einer zumindest größtenteils geschlossenen Filtermedium-Fläche (19), wobei
- die Mehrzahl von Befestigungsvorrichtungen (13) aufweist eine Mehrzahl von langgestreckten Längsrand-Aufnahmenuten (21), die jeweils eine Längsrand-Aufnahmenut-Längsachse (23) definieren und eine sich entlang der Längsrand-Aufnahmenut-Längsachse (23) erstreckende, langgestreckte Längsrand-Aufnahmenut-Zugangsöffnung (25) haben und die an der Filtertrommelumfangswand (7) ausgebildet sind und sich mit ihrer Längsrand-Aufnahmenut-Längsachse (23) parallel zur Filtertrommellängsachse (5) erstrecken sowie in Umfangsrichtung (27) der Filtertrommel (3) im Abstand voneinander angeordnet sind und in welche jeweils zwei zueinander benachbarte Filtermedium-Stück-Längsränder (15) via die zugehörige Längsrand-Aufnahmenut-Zugangsöffnung (25) eingreifen, wobei
- die jeweilige Längsrand-Aufnahmenut (21) bezüglich der Längsrand-Aufnahmenut-Längsachse (23) beidseitig mit einer jeweiligen langgestreckten Hinterschneidung (29a, 29b) ausgebildet ist, die sich entlang der Längsrand-Aufnahmenut-Längsachse (23) erstreckt und die einem jeweiligen Filtermedium-Stück-Längsrand (15) zugeordnet ist, wobei
- der jeweilige Filtermedium-Stück-Längsrand (15) zumindest größtenteils durchgehend mit einer flachbandförmigen Filtermedium-Längsrandverstärkung (31) versehen ist, die angrenzend zu einer Stirnfläche (33) des Filtermedium-Stück-Längsrands (31) und auf dem Filtermedium-Stück-Längsrand (15) angeordnet und an den Filtermedium-Stück-Längsrand (15) angestückt ist,
- wobei der jeweilige Filtermedium-Stück-Längsrand (15) zusammen mit seiner flachbandförmigen Filtermedium-Längsrandverstärkung (31) in der jeweils zugeordneten Hinterschneidung (29a, 29b) angeordnet ist, und wobei
- die Mehrzahl von Befestigungsvorrichtungen (13) ferner aufweist eine Mehrzahl von langgestreckten Längsrand-Haltekörpern (37), die jeweils eine Längsrand-Haltekörper-Längsachse (39) definieren und die in einer jeweils zugeordneten Längsrand-Aufnahmenut (21) aufgenommen sind und sich mit ihrer Längsrand-Haltekörper-Längsachse (39) parallel zu der Längsrand-Aufnahmenut-Längsachse (23) der zugeordneten Längsrand-Aufnahmenut (21) erstrecken und die jeweils einen Längsrand-Haltekörper-Querschnittdurchmesser (d) haben, der größer als eine Breite (b) der Längsrand-Aufnahmenut-Zugangsöffnung (25) der zugehörigen Längsrand-Aufnahmenut (21) ist, um dadurch den jeweiligen Filtermedium-Stück-Längsrand (15) zusammen mit seiner flachbandförmigen Filtermedium-Stück-Längsrandverstärkung (31) in der jeweils zugeordneten Hinterschneidung (29a, 29b) zu halten.

2. Druck- und/oder Vakuumfiltervorrichtung (1) gemäß Anspruch 1, wobei einer oder der jeweilige Längsrand-Haltekörper (37) von einer starren, zylindrischen Stange oder von einer flexiblen Kordel oder flexiblen Rundschnur oder von einer zylindrischen Wendelstruktur (61) mit einem Wendelstruktur-Querschnitt quer zur Längsrand-Haltekörper-Längsachse (39) gebildet ist, welche bezüglich der Längsrand-Haltekörper-Längsachse (39) biegeflexibel ist und in radialer Richtung ihres Wendelstruktur-Querschnitts (61) starr ist.

3. Druck- und/oder Vakuumfiltervorrichtung (1) gemäß einem der Ansprüche 1 bis 2, wobei die Mehrzahl von Befestigungsvorrichtungen (13) ferner aufweist eine Mehrzahl von langgestreckten Querrand-Aufnahmenuten (41), die jeweils eine Querrand-Aufnahmenut-Längsachse (43) definieren und eine sich entlang der Querrand-Aufnahme-Längsachse (43) erstreckende, langgestreckte Querrand-Aufnahmenut-Zugangsöffnung (45) haben und die an der Filtertrommelumfangswand (7) ausgebildet sind und sich mit ihrer Querrand-Aufnahmenut-Längsachse (43) in eine Umfangsrichtung (27) der Filtertrommel (3) erstrecken sowie in Längsrichtung der Filtertrommel im Abstand voneinander angeordnet sind und in welche die Filtermedium-Stück-Querränder (17) via die zugehörige Querrand-Aufnahmenut-Zugangsöffnung (45) eingreifen, wobei
- die jeweilige Querrand-Aufnahmenut (41) bezüglich der Querrand-Aufnahmenut-Längsachse (43) beidseitig mit einer jeweiligen langgestreckten Hinterschneidung (47a, 47b) ausgebildet ist, die sich entlang der Querrand-Aufnahmenut-Längsachse (43) erstreckt und die einem jeweiligen Filtermedium-Stück-Querrand (17) zugeordnet ist, wobei
- der jeweilige Filtermedium-Stück-Querrand (17) zumindest größtenteils durchgehend mit einer flachbandförmigen Filtermedium-Querrandverstärkung (49) versehen ist, die angrenzend zu einer Stirnfläche (51) des Filtermedium-Stück-Querrands (17) auf dem Filtermedium-Stück-Querrand (17) angeordnet ist und an den Filtermedium-Stück-Querrand (17) angestückt ist, wobei
- der jeweilige Filtermedium-Stück-Querrand (17) zusammen mit seiner flachbandförmigen Filtermedium-Querrandverstärkung (49) in der jeweils zugeordneten Hinterschneidung (47a, 47b) angeordnet ist, und wobei
- die Mehrzahl von Befestigungsvorrichtungen (13) ferner aufweist eine Mehrzahl von langgestreckten Querrand-Haltekörpern (53), die jeweils eine Querrand-Haltekörper-Längsachse (55) definieren und die in einer jeweils zugeordneten Querrand-Aufnahmenut (41) aufgenommen sind und sich mit ihrer Querrand-Haltekörper-Längsachse (55) parallel zu der Querrand-Aufnahmenut-Längsachse (43) der zugeordneten Querrand-Aufnahmenut (41) erstrecken und die jeweils einen Querrand-Haltekörper-Querschnittdurchmesser (d) haben, der größer als eine Breite (b) der Querrand-Aufnahmenut-Zugangsöffnung (45) der zugehörigen Querrand-Aufnahmenut (41) ist, um dadurch den jeweiligen Filtermedium-Stück-Querrand (17) zusammen mit seiner flachbandförmigen Filtermedium-Querrandverstärkung (49) in der jeweils zugeordneten Hinterschneidung (47a, 47b) zu halten.

4. Druck- und/oder Vakuumfiltervorrichtung (1) gemäß Anspruch 3, wobei einer oder der jeweilige Querrand-Haltekörper (53) von einer flexiblen Kordel oder einer flexiblen Rundschnur oder von einer Wendelstruktur (61) mit einem Wendelstruktur-Querschnitt quer zur Querrand-Haltekörper-Längsachse (43) gebildet ist, welche bezüglich der Querrand-Haltekörper-Längsachse (43) biegeflexibel ist und in radialer Richtung ihres Wendelstruktur-Querschnitts starr ist.

5. Druck- und/oder Vakuumfiltervorrichtung (1) gemäß einem der Ansprüche 1 bis 4, wobei zumindest eine oder die jeweilige Filtermedium-Längsrandverstärkung (31) und/oder wobei zumindest eine oder die jeweilige Filtermedium-Querrandverstärkung (49) von dem Filtertuchmaterial des zugehörigen Filtermedium-Stücks (9a) gebildet ist und als ein Saum ausgebildet ist, der durch einfaches oder mehrfaches Nach-Innen-Umschlagen des Filtertuchmaterials entlang des zugehörigen Filtermedium-Stück-Längsrands (15) bzw. entlang des zugehörigen Filtermedium-Stück-Querrands (17) gebildet ist.

6. Druck- und/oder Vakuumfiltervorrichtung (1) gemäß einem der Ansprüche 1 bis 5, wobei zumindest eine oder die jeweilige Filtermedium-Längsrandverstärkung (31) und/oder wobei zumindest eine oder die jeweilige Filtermedium-Querrandverstärkung (49) von einem von dem Filtertuchmaterial separaten Verstärkungsmaterial gebildet ist, wobei optional das Verstärkungsmaterial aus einem Tuchmaterial gemacht ist, das mit dem Filtertuchmaterial korrespondiert, und/oder aus einem PTFE-Material gemacht ist.

7. Druck- und/oder Vakuumfiltervorrichtung (1) gemäß einem der Ansprüche 1 bis 6, wobei die jeweilige Filtermedium-Längsrandverstärkung (31) auf einer bezüglich der Filtertrommellängsachse (5) radial inneren Seite des zugehörigen Filtermedium-Stücks (9a) angeordnet ist.

8. Druck- und/oder Vakuumfiltervorrichtung (1) gemäß einem der Ansprüche 1 bis 7 in Kombination mit Anspruch 3, wobei die jeweilige Filtermedium-Querrandverstärkung (49) auf einer bezüglich der Filtertrommellängsachse (5) radial inneren Seite des zugehörigen Filtermedium-Stücks (9a) angeordnet ist.

## Revendications

1. Dispositif de filtration sous pression et/ou sous vide (1), comprenant
- un tambour de filtration (3) qui définit un axe longitudinal de tambour de filtration (5) et qui comprend une paroi circonférentielle de tambour de filtration (7) qui s'étend autour de l'axe longitudinal de tambour de filtration (5),
- un milieu de filtration (9) qui est agencé sur un côté extérieur (11) de la paroi circonférentielle de tambour de filtration (7), et
- une pluralité de dispositifs de fixation (13), au moyen desquels le milieu de filtration (9) est attaché fixement à la paroi circonférentielle de tambour de filtration (7), dans lequel
- le milieu de filtration (9) comprend une pluralité d'éléments de milieu de filtration (9a) qui sont séparés les uns des autres et qui sont constitués chacun d'un matériau de tissu de filtration et qui comportent chacun des bords longitudinaux d'élément de milieu de filtration (15), qui sont agencés l'un en face de l'autre et qui sont au moins pour la plus grande partie une partie sans couture du matériau de tissu de filtration, ainsi que des bords transversaux d'élément de milieu de filtration (17), qui sont agencés l'un en face de l'autre, et qui s'étendent avec leurs bords longitudinaux d'élément de milieu de filtration (15) parallèles à l'axe longitudinal de tambour de filtration (5) ainsi que de manière adjacente les uns aux autres pour, de ce fait, former au moins pour la plus grande partie une surface de milieu de filtration complète (19), dans lequel
- la pluralité de dispositifs de fixation (13) comprend une pluralité de rainures de réception de bord longitudinal (21) allongées qui définissent chacune un axe longitudinal de rainure de réception de bord longitudinal (23) et qui comportent chacune une ouverture d'accès de rainure de réception de bord longitudinal (25) allongée, qui s'étend le long de l'axe longitudinal de rainure de réception de bord longitudinal (23), et qui sont formées sur la paroi circonférentielle de tambour de filtration (7) et s'étendent avec leur axe longitudinal de rainure de réception de bord longitudinal (23) parallèle à l'axe longitudinal de tambour de filtration (5) et qui sont également espacées les unes des autres dans la direction circonférentielle (27) du tambour de filtration (3) et dans lesquelles deux bords longitudinaux d'élément de milieu de filtration (15), qui sont adjacents l'un à l'autre, s'engagent respectivement par l'intermédiaire de l'ouverture d'accès de rainure de réception de bord longitudinal (25) correspondante, dans lequel
- la rainure de réception de bord longitudinal (21) respective est formée, par rapport à l'axe longitudinal de rainure de réception de bord longitudinal (23), des deux côtés avec un dégagement allongé (29a, 29b) respectif, qui s'étend le long de l'axe longitudinal de rainure de réception de bord longitudinal (23) et qui est attribué à un bord longitudinal d'élément de milieu de filtration (15) respectif, dans lequel
- le bord longitudinal d'élément de milieu de filtration (15) respectif est au moins pour la plus grande partie pourvu continûment d'un renfort de bord longitudinal de milieu de filtration (31) qui est en forme de ruban plat et qui est agencé de manière adjacente à une face avant (33) du bord longitudinal d'élément de milieu de filtration (15) et sur le bord longitudinal d'élément de milieu de filtration (15) et qui est relié au bord longitudinal d'élément de milieu de filtration (15),
- dans lequel le bord longitudinal d'élément de milieu de filtration (15) respectif avec son renfort de bord longitudinal de milieu de filtration en forme de ruban plat (31) est agencé dans le dégagement (29a, 29b) respectivement attribué, et dans lequel
- la pluralité de dispositifs de fixation (13) comprend en outre une pluralité de corps de support de bord longitudinal (37) allongés, qui définissent chacun un axe longitudinal de corps de support de bord longitudinal (39) et qui sont reçus dans une rainure de réception de bord longitudinal (21) respectivement attribuée et qui s'étendent avec leur axe longitudinal de corps de support de bord longitudinal (39) parallèle à l'axe longitudinal de rainure de réception de bord longitudinal (23) de la rainure de réception de bord longitudinal (21) correspondante et qui ont chacun un diamètre en coupe de corps de support de bord longitudinal (d) qui est plus grand qu'une largeur (b) de l'ouverture d'accès de rainure de réception de bord longitudinal (25) de la rainure de réception de bord longitudinal (21) correspondante pour, de ce fait, maintenir le bord longitudinal d'élément de milieu de filtration (15) respectif avec son renfort de bord longitudinal d'élément de milieu de filtration en forme de ruban plat (31) dans le dégagement (29a, 29b) respectivement attribué.

2. Dispositif de filtration sous pression et/ou sous vide (1) selon la revendication 1, dans lequel un ou le corps de support de bord longitudinal (37) respectif est formé par une tige cylindrique rigide ou par une chaîne souple ou un cordon rond souple ou par une structure en hélice cylindrique (61) qui a une section de structure en hélice transversale à l'axe longitudinal de corps de support de bord longitudinal (39) et qui, par rapport à l'axe longitudinal de corps de support de bord longitudinal (39), est souple dans la direction angulaire et qui est rigide dans la direction radiale de sa section transversale de structure en hélice.

3. Dispositif de filtration sous pression et/ou sous vide (1) selon l'une des revendications 1 et 2, dans lequel la pluralité de dispositifs de fixation (13) comprend en outre une pluralité de rainures de réception de bord transversal (41) allongées qui définissent chacune un axe longitudinal de rainure de réception de bord transversal (43) et qui comportent chacune une ouverture d'accès de rainure de réception de bord transversal (45) allongée, qui s'étend le long de l'axe longitudinal de rainure de réception de bord transversal (43), et qui sont formées sur la paroi circonférentielle de tambour de filtration (7) et s'étendent avec leur axe longitudinal de rainure de réception de bord transversal (43) respectif dans une direction circonférentielle (27) du tambour de filtration (3) et qui sont également espacées les unes des autres dans la direction longitudinale du tambour de filtration (3) et dans lesquelles les bords transversaux d'élément de milieu de filtration (17) s'engagent par l'intermédiaire de l'ouverture d'accès de rainure de réception de bord transversal (45) correspondante, dans lequel
- la rainure de réception de bord transversal (41) respective est pourvue, par rapport à l'axe longitudinal de rainure de réception de bord transversal (43), des deux côtés d'un dégagement allongé (47a, 47b) respectif qui s'étend le long de l'axe longitudinal de rainure de réception de bord transversal (43) et qui est attribué à un bord transversal d'élément de milieu de filtration (17) respectif, dans lequel
- le bord transversal d'élément de milieu de filtration (17) respectif est au moins pour la plus grande partie pourvu continûment d'un renfort de bord transversal de milieu de filtration (49) qui est en forme de ruban plat et qui est agencé adjacent à une face avant (51) du bord transversal d'élément de milieu de filtration (17) sur le bord transversal d'élément de milieu de filtration et qui est relié au bord transversal d'élément de milieu de filtration (17), dans lequel
- le bord transversal d'élément de milieu de filtration (17) respectif avec son renfort de bord transversal de milieu de filtration en forme de ruban plat (49) est agencé dans le dégagement (47a, 47b) respectivement attribué, et dans lequel
- la pluralité de dispositifs de fixation (13) comprend en outre une pluralité de corps de support de bord transversal (53) allongés qui définissent respectivement un axe longitudinal de corps de support de bord transversal (55) et qui sont reçus dans une rainure de réception de bord transversal (41) respectivement attribuée et s'étendent avec leur axe longitudinal de corps de support de bord transversal (55) parallèle à l'axe longitudinal de rainure de réception de bord transversal (43) de la rainure de réception de bord transversal (41) correspondante et qui ont respectivement un diamètre en coupe de corps de support de bord transversal (d) qui est plus grand qu'une largeur (b) de l'ouverture d'accès de rainure de réception de bord transversal (45) de la rainure de réception de bord transversal (41) correspondante pour, de ce fait, maintenir le bord transversal d'élément de milieu de filtration (17) respectif avec son renfort de bord transversal de milieu de filtration en forme de ruban plat (49) dans le dégagement (47a, 47b) respectivement attribué.

4. Dispositif de filtration sous pression et/ou sous vide (1) selon la revendication 3, dans lequel un ou le corps de support de bord transversal (53) respectif est formé par une chaîne souple ou un cordon rond souple ou par une structure en hélice (61) qui a une section de structure en hélice transversale à l'axe longitudinal de corps de support de bord transversal (43) et qui est souple dans la direction angulaire par rapport à l'axe longitudinal de corps de support de bord transversal (43) et qui est rigide dans la direction radiale de sa section de structure en hélice.

5. Dispositif de filtration sous pression et/ou sous vide (1) selon l'une des revendications 1 à 4, dans lequel au moins un ou le renfort de bord longitudinal de milieu de filtration (31) respectif et/ou dans lequel au moins un ou le renfort de bord transversal de milieu de filtration (49) respectif est formé par le matériau de tissu de filtration de l'élément de milieu de filtration (9a) correspondant et est formé comme un ourlet qui est formé en pliant vers l'intérieur une fois ou de multiples fois le matériau de tissu de filtration le long du bord longitudinal d'élément de milieu de filtration (15) correspondant et/ou le long du bord transversal d'élément de milieu de filtration (17) correspondant, respectivement.

6. Dispositif de filtration sous pression et/ou sous vide (1) selon l'une des revendications 1 à 5, dans lequel au moins un ou le renfort de bord longitudinal de milieu de filtration (31) respectif et/ou dans lequel au moins un ou le renfort de bord transversal de milieu de filtration (49) respectif est formé par un matériau de renforcement qui est séparé du matériau de tissu de filtration, dans lequel en option le matériau de renforcement est constitué d'un matériau à base de tissu qui correspond au matériau de tissu de filtration et/ou qui est constitué d'un matériau à base de PTFE.

7. Dispositif de filtration sous pression et/ou sous vide (1) selon l'une des revendications 1 à 6, dans lequel le renfort de bord longitudinal de milieu de filtration (31) respectif est agencé, par rapport à l'axe longitudinal de tambour de filtration (5), sur un côté intérieur radial de l'élément de milieu de filtration (9a) correspondant.

8. Dispositif de filtration sous pression et/ou sous vide (1) selon l'une des revendications 1 à 7 en combinaison avec la revendication 3, dans lequel le renfort de bord transversal de milieu de filtration (49) respectif est agencé, par rapport à l'axe longitudinal de tambour de filtration (5), sur un côté intérieur radial de l'élément de milieu de filtration (9a) correspondant.
